(19) **Europäisches Patentamt**
**European Patent Office**
**Office européen des brevets**

(11) **EP 3 432 406 B1**

(12) **EUROPEAN PATENT SPECIFICATION**

(45) Date of publication and mention
of the grant of the patent:
**18.01.2023 Bulletin 2023/03**

(21) Application number: **17766272.3**

(22) Date of filing: **23.02.2017**

(51) International Patent Classification (IPC):
$H01M\ 10/0525^{(2010.01)}$   $H01M\ 4/133^{(2010.01)}$
$H01M\ 4/36^{(2006.01)}$   $H01M\ 4/505^{(2010.01)}$
$H01M\ 4/525^{(2010.01)}$   $H01M\ 4/587^{(2010.01)}$
$H01M\ 4/62^{(2006.01)}$   $H01M\ 10/0567^{(2010.01)}$
$H01M\ 10/058^{(2010.01)}$

(52) Cooperative Patent Classification (CPC):
**H01M 4/133; H01M 4/131; H01M 4/366;
H01M 4/505; H01M 4/525; H01M 4/587;
H01M 4/625; H01M 10/0525; H01M 10/0567**

(86) International application number:
**PCT/JP2017/006784**

(87) International publication number:
**WO 2017/159267 (21.09.2017 Gazette 2017/38)**

(54) **NONAQUEOUS ELECTROLYTE SECONDARY BATTERY AND METHOD FOR MANUFACTURING SAME**

SEKUNDÄRBATTERIE MIT WASSERFREIEM ELEKTROLYT UND VERFAHREN ZUR HERSTELLUNG DAVON

BATTERIE RECHARGEABLE À ÉLECTROLYTE NON AQUEUX ET SON PROCÉDÉ DE FABRICATION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **18.03.2016 JP 2016055699**

(43) Date of publication of application:
**23.01.2019 Bulletin 2019/04**

(73) Proprietor: **Envision AESC Japan Ltd.
Sagamihara-shi, Kanagawa 252-0254 (JP)**

(72) Inventor: **WATANABE Kenji
Sagamihara-shi
KANAGAWA 252-0254 (JP)**

(74) Representative: **Glawe, Delfs, Moll
Partnerschaft mbB von
Patent- und Rechtsanwälten
Postfach 13 03 91
20103 Hamburg (DE)**

(56) References cited:
**EP-A1- 3 376 573        WO-A1-2013/005502
WO-A1-2015/194559    WO-A1-2015/194559
WO-A1-2016/021596    JP-A- 2011 108 498
JP-A- 2015 090 857     JP-A- 2015 207 471
US-A1- 2007 154 815**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

Technical Field

The present invention relates to a non-aqueous electrolytic solution secondary battery and a method for producing the same.

Background Art

Lithium ion secondary batteries, which are non-aqueous electrolytic solution secondary batteries, have high energy density and excellent charge/discharge cycle characteristics, and are thus widely used for a power supply for compact mobile devices such as cellular phones and laptop computers. In addition, the recent increasing environmental considerations and growing consciousness of energy saving have been promoting a demand for large batteries having a large capacity and a long life in the fields of electric vehicles, hybrid electric vehicles, power storage, etc.

In general, a lithium ion secondary battery primarily consists of: a negative electrode including a negative electrode active material of a carbon material capable of intercalating and deintercalating a lithium ion; a positive electrode including a positive electrode active material of a lithium composite oxide capable of intercalating and deintercalating a lithium ion; a separator separating the negative electrode and the positive electrode; and a non-aqueous electrolytic solution prepared by dissolving a lithium salt in a non-aqueous solvent.

To improve the characteristics of such lithium ion secondary batteries, various examinations have been made.

Patent Literature 1 describes a non-aqueous electrolytic solution secondary battery, wherein the non-aqueous electrolytic solution contains a particular fluorinated cyclic carbonate, and the upper limit of the operating voltage for the positive electrode is 4.75 V or higher and 4.90 V or lower based on $Li/Li^+$, and describes that there can be provided a non-aqueous electrolytic solution secondary battery that is designed for high voltages and excellent in cycle durability at high temperature and having a high energy density. The literature describes use of a particular lithium-transition metal compound ($LiNi_{0.5}Mn_{1.5}O_4$ in Example 1) for the positive electrode active material and a graphite particle (a natural graphite-based carbonaceous material in Examples) for the negative electrode active material in the battery. The literature discloses that various cyclic sulfonates such as 1,3-propanesultone and methylene methanedisulfonate may be blended in the electrolytic solution in addition to the fluorinated cyclic carbonate.

Amorphous carbon or graphite is used for the carbon material used as the negative electrode active material in a lithium ion secondary battery, and graphite is typically used particularly in an application which requires a high energy density.

For example, Patent Literature 2 describes a carbon material for a negative electrode for a non-aqueous electrolyte secondary battery, the carbon material including a mixture of an artificial graphite particle and a natural graphite particle at 50:50 to 80:20 (mass ratio), wherein the artificial graphite particle has an interplanar spacing for the (002) plane, $d_{002}$, of 0.3354 to 0.3360 nm in the X-ray diffraction pattern, and an average aspect ratio of 1 to 5; the natural graphite particle has an interplanar spacing for the (002) plane, $d_{002}$, of 0.3354 to 0.3357 nm in the X-ray diffraction pattern, a median diameter ($D_{50}$) of 10 to 25 $\mu$m, and relations among the $D_{50}$, the diameter at 10 cumulative% ($D_{10}$), and the diameter at 90 cumulative% ($D_{90}$), specifically, $D_{90}/D_{50}$ and $D_{50}/D_{10}$ are each 1.6 or smaller. The literature states that an object of the invention is to provide a non-aqueous electrolyte secondary battery excellent in charging/loading characteristics in a low-temperature environment by using such a carbon material.

Patent Literature 3 describes a negative electrode for a non-aqueous electrolyte secondary battery, the negative electrode including a first carbon capable of electrochemically intercalating and deintercalating a lithium ion; and a second carbon capable of electrochemically intercalating and deintercalating a lithium ion or substantially incapable of intercalating a lithium ion, wherein an aggregate of the second carbon particle is primarily localized in an empty space among a plurality of particles of the first carbon, and the average particle diameter of the second carbon is 15% or less of the average particle diameter of the first carbon. The literature states that an object of the invention is to provide a non-aqueous electrolyte secondary battery with such a negative electrode in which the peeling of a mixture layer caused by charge/discharge cycles can be prevented and which provides a high capacity.

Patent Literature 4 describes a negative electrode material for a non-aqueous electrolytic solution secondary battery, the negative electrode material including a graphite particle (A) and a carbon material (B), wherein the graphite particle (A) has an interplanar spacing for the 002 plane (d002) of 3.37 Å (0.337 nm) or smaller as measured with a wide angle X-ray diffraction method, and an average roundness of 0.9 or higher; the carbon material (B) has an interplanar spacing for the 002 plane (d002) of 3.37 Å (0.337 nm) or smaller, a Raman R value (peak strength around 1360 cm$^{-1}$/peak strength around 1580 cm$^{-1}$) of 0.18 to 0.7 in the Raman spectrum with an argon ion laser, an aspect ratio of 4 or larger, and an average particle diameter (d50) of 2 to 12 $\mu$m; and the mass fraction of the carbon material (B) to the total amount of the graphite particle (A) and the carbon material (B) is 0.5 to 15 % by mass. The literature states that a non-aqueous electrolytic solution secondary battery with such a negative electrode material exhibits low irreversible capacity and excellent properties in terms of charge/discharge efficiency. Furthermore, Patent Literature 5 discloses an electrolytic solution and a secondary battery, wherein the positive electrode active material comprises NCM523, wherein an electrolytic solution may comprise 1.6% by weight of methylene methanedisulfonic acid ester (MMDS), wherein it is taught that the content of nickel shall not exceed 0.5 to allow a good thermal stability.

Citation List

Patent Literature

Patent Literature 1: JP2014-86221A
Patent Literature 2: JP2009-026514A
Patent Literature 3: JP2012-014838A
Patent Literature 4: JP2012-084519A
Patent Literature 5: WO 2015/194559 A1

Summary of Invention

Technical Problem

An object of the present invention is to provide a non-aqueous electrolytic solution secondary battery having satisfactory cycle characteristics.

Solution to Problem

The above-noted object is solved by a non-aqueous electrolytic solution secondary battery according to claim 1 and by a method for producing the same according to claim 9. Preferable embodiments are described in the dependent claims. According to one aspect of the present invention is provided a non-aqueous electrolytic solution secondary battery comprising a positive electrode including a positive electrode active material capable of intercalating and deintercalating a lithium ion; a negative electrode including a negative electrode active material capable of intercalating and deintercalating a lithium ion; a non-aqueous electrolytic solution containing a lithium ion; and an outer package,

wherein the positive electrode active material comprises a lithium-containing composite oxide having a layered rock salt structure and represented by the following composition formula:

$$LiNi_xCo_yMn_zO_2$$

provided that $0.7 \leq x \leq 0.9$, $0.05 \leq y \leq 0.2$, $0.05 \leq z \leq 0.15$, and $x + y + z = 1$ are satisfied, and
the battery is formed by using the non-aqueous electrolytic solution containing methylene methanedisulfonate and having a content thereof of 2.0 % by mass or more and 5.0 % by mass or less based on a solvent.

According to another aspect of the present invention is provided a non-aqueous electrolytic solution secondary battery comprising a positive electrode including a positive electrode active material capable of intercalating and deintercalating a lithium ion; a negative electrode comprising a negative electrode active material capable of intercalating and deintercalating a lithium ion; a non-aqueous electrolytic solution containing a lithium ion; and an outer package,

wherein the positive electrode active material comprises a lithium-containing composite oxide having a layered rock salt structure and represented by the following composition formula:

$$LiNi_xCo_yMn_zO_2$$

provided that $0.7 \leq x \leq 0.9$, $0.05 \leq y \leq 0.2$, $0.05 \leq z \leq 0.15$, and $x + y + z = 1$ are satisfied, and
the content of methylene methanedisulfonate in the non-aqueous electrolytic solution is not larger than 5.0 % by mass based on a solvent.

According to another aspect of the present invention is provided a method for producing a non-aqueous electrolytic solution secondary battery comprising a positive electrode comprising a positive electrode active material capable of intercalating and deintercalating a lithium ion; a negative electrode comprising a negative electrode active material capable of intercalating and deintercalating a lithium ion; a non-aqueous electrolytic solution containing a lithium ion; and an outer package, the method including:

forming a positive electrode;
forming a negative electrode;
forming a non-aqueous electrolytic solution; and
putting the positive electrode, the negative electrode, and the non-aqueous electrolytic solution in an outer package, wherein the positive electrode active material comprises a lithium-containing composite oxide having a layered rock salt structure and represented by the following composition formula:

$$LiNi_xCo_yMn_zO_2$$

provided that $0.7 \leq x \leq 0.9$, $0.05 \leq y \leq 0.2$, $0.05 \leq z \leq 0.15$, and $x + y + z = 1$ are satisfied, and the non-aqueous electrolytic solution contains methylene methanedisulfonate and has a content thereof is 2.0 % by mass or more and 5.0 % by mass or less based on a solvent.

Advantageous Effects of Invention

According to an exemplary embodiment, a non-aqueous electrolytic solution secondary battery having satisfactory cycle characteristics can be provided.

Brief Description of Drawings

[Figure 1] Figure 1 is a cross-sectional view for illustrating an example of a non-aqueous electrolytic solution secondary battery according to an exemplary embodiment.
[Figure 2A] Figure 2A is a schematic view for illustrating the distribution of particles in a negative electrode (a state of an active material in shrinkage due to discharge) in a secondary battery according to a related art.
[Figure 2B] Figure 2B is a schematic view for illustrating the distribution of particles in a negative electrode (a state of an active material in shrinkage due to discharge) in a secondary battery according to an exemplary embodiment.

Description of Embodiments

The non-aqueous electrolytic solution secondary battery (lithium ion secondary battery) according to an exemplary embodiment includes a positive electrode including a particular lithium-containing composite oxide as a positive electrode active material; a negative electrode including a negative electrode active material; and a non-aqueous electrolytic solution, and the positive electrode, the negative electrode, and the non-aqueous electrolytic solution are contained in an outer package. A separator can be provided between the positive electrode and the negative electrode. A plurality of electrode pairs of the positive electrode and the negative electrode can be provided.
In view of achievement of high energy density, it is preferred to use a lithium-containing composite oxide containing nickel (lithium-nickel composite oxide) as a positive electrode active material. If a lithium-containing composite oxide with a high nickel content is used, however, the charge transfer resistance tends to increase in a region of high state of charge (SOC). Accordingly, a non-aqueous electrolytic solution secondary battery with such a lithium-containing composite oxide disadvantageously fails to achieve sufficient cycle characteristics.
The present inventor has focused on this phenomenon and the composition of an electrolytic solution and diligently examined. As a result, the present inventor has found that a non-aqueous electrolytic solution secondary battery having improved cycle characteristics can be obtained even when a lithium-containing composite oxide with a high nickel content is used as a positive electrode active material, and thus completed the present invention.
Specifically, the main feature of an exemplary embodiment is that a positive electrode active material containing a lithium-containing composite oxide having a layered rock salt structure and represented by the following composition formula:

$$LiNi_xCo_yMn_zO_2$$

provided that $0.7 \leq x \leq 0.9$, $0.05 \leq y \leq 0.2$, $0.05 \leq z \leq 0.15$, and $x + y + z = 1$ are satisfied, is used, and a battery is formed by using a non-aqueous electrolytic solution containing 2.0 % by mass or more and 5.0 % by mass or less (0.13 to 0.31 mol/L) of methylene methanedisulfonate based on a solvent.

When the content of methylene methanedisulfonate is 2.0 % by mass or more, a sufficient improving effect is provided, and the content is more preferably 2.3 % by mass or more, and even more preferably 3.0 % by mass or more. The content is preferably 5.0 % by mass or less, and more preferably 4.0 % by mass or less, in view of prevention of increase of the viscosity or resistance of the electrolytic solution.

The lithium-containing composite oxide with a high nickel content (represented by the above composition formula) undergoes phase transition in a region of high SOC (such phase transition is not observed for other lithium-containing composite oxides below 4.3 V). This phase transition is considered to cause increase of the charge transfer resistance and degradation of the cycle characteristics (e.g., see Comparative Examples 5 and 6 in Table 3). Swelling and shrinkage associated with the phase transition cause frequent formation of a newly-generated surface through generation of a crack in the surface of an active material. Methylene methanedisulfonate has high reactivity to the newly-generated surface, and reacts with the newly-generated surface to form a satisfactory coating film. This coating film formed is inferred to inhibit cracking of an active agent, decomposition of a solvent, and elution of alkali components to prevent increase of the charge transfer resistance, resulting in improvement of the cycle characteristics. This improving effect is particularly high when methylene methanedisulfonate (MMDS) is used, and propanesultone, which is another sulfur-containing additive, does not provide a sufficient improving effect (e.g., see Example 1 and Comparative Example 8 in Table 3).

An exemplary embodiment of the present invention can be represented as follows: a non-aqueous electrolytic solution secondary battery including a positive electrode including a positive electrode active material capable of intercalating and deintercalating a lithium ion; a negative electrode including a negative electrode active material capable of intercalating and deintercalating a lithium ion; a non-aqueous electrolytic solution containing a lithium ion; and an outer package, wherein

the positive electrode active material contains a lithium-containing composite oxide having a layered rock salt structure and represented by the following composition formula:

$$LiNi_xCo_yMn_zO_2$$

provided that $0.7 \leq x \leq 0.9$, $0.05 \leq y \leq 0.2$, $0.05 \leq z \leq 0.15$, and $x + y + z = 1$ are satisfied, and the content of methylene methanedisulfonate in the non-aqueous electrolytic solution is not larger than 5.0 % by mass based on a solvent.

Although methylene methanedisulfonate in the non-aqueous electrolytic solution can react to form a coating film on the surface of an active material in production of a battery (e.g., in a step of aging), methylene methanedisulfonate may be present in the non-aqueous electrolytic solution in a battery after production thereof and react to form a coating film during cycles. From this viewpoint, the content of methylene methanedisulfonate in the non-aqueous electrolytic solution based on a solvent after production of a battery (e.g., after a step of aging) may be 0.01 % by mass or more, or may be even 0.05 % by mass or more, and can be 0.1 % by mass or more; and the content is preferably 5.0 % by mass or less, and more preferably 4.0 % by mass or less in view of prevention of increase of the viscosity or resistance of the electrolytic solution. When methylene methanedisulfonate is contained in the non-aqueous electrolytic solution in a battery after production thereof (e.g., after a step of aging), when a crack is generated in the surface of an active material and a newly-generated surface appears in use of the battery (during charge/discharge cycles), the methylene methanedisulfonate contained can form a coating film on the newly-generated surface, resulting in satisfactory cycle characteristics.

The negative electrode in a secondary battery with the positive electrode preferably includes a graphite active material as a negative electrode active material in view of achievement of high energy density. In view of improvement of the electroconductivity, the negative electrode preferably further includes a conductive aid.

In view of further improvement of the cycle characteristics, the negative electrode preferably includes a fine graphite material having an average particle diameter smaller than the average particle diameter of the negative electrode active material. The average particle diameter (median diameter $D_{50}$) of the fine graphite material is preferably in the range of 1 to 15 $\mu$m.

When an appropriate amount of a fine graphite particle having an appropriate size to a particle of a negative electrode is added, the fine graphite particle is involved in formation and retention of an electroconductive path of the negative electrode active material thereby to prevent disconnection of the electroconductive path of the negative electrode active material in charge/discharge cycles, and thus the electroconductive path tends to be retained, which can contribute to improvement of the cycle characteristics.

The ratio of the average particle diameter ($D_{50}$) of the fine graphite material, Db, to the average particle diameter ($D_{50}$) of the negative electrode active material, Da, Db/Da, is preferably in the range of 0.2 to 0.7.

The mass ratio of the fine graphite material to the conductive aid is preferably in the range from 1 to 10. The content of the fine graphite material is preferably in the range of 0.1 to 6.0 % by mass based on the negative electrode active material. The content of the conductive aid is preferably in the range of 0.1 to 3.0 % by mass based on the negative electrode active material.

The fine graphite material is preferably a scale-shaped particle, and the negative electrode active material is preferably a spheroidized graphite particle.

The non-aqueous electrolytic solution secondary battery according to an exemplary embodiment can have the following suitable configuration.

(Positive electrode)

The positive electrode preferably has a structure including a current collector and a positive electrode active material layer formed on the current collector.

(Positive electrode active material)

It is preferred to use the lithium-containing composite oxide having a layered rock salt structure as a positive electrode active material. The positive electrode active material layer may include an additional active material other than the lithium composite oxide, and the content of the lithium-nickel composite oxide is preferably 80 % by mass or more, more preferably 90 % by mass or more, and even more preferably 95 % by mass or more in view of energy density.

The BET specific surface area (acquired in measurement at 77 K in accordance with a nitrogen adsorption method) of the positive electrode active material is preferably in the range of 0.1 to 1 $m^2$/g, and more preferably in the range of 0.3 to 0.5 $m^2$/g. If the specific surface area of the positive electrode active material is excessively small, a crack is likely to be generated in pressing in fabrication of an electrode or in cycles because of the large particle diameter, and significant degradation of the characteristics is likely to occur, leading to difficulty in production of an electrode with high density. If the specific surface area is excessively large, in contrast, a larger amount of the conductive aid to be contacted with an active material is required, which complicates achievement of high energy density. The positive electrode active material having a specific surface area in the above range provides a positive electrode excellent with respect to energy density and cycle characteristics.

The average particle diameter of the positive electrode active material is preferably 0.1 to 50 $\mu$m, more preferably 1 to 30 $\mu$m, and even more preferably 2 to 25 $\mu$m. Here, an average particle diameter refers to a particle diameter at an integrated value up to 50% (median diameter: $D_{50}$) in a particle size distribution (volume-based) obtained by using a laser diffraction/scattering method. The positive electrode active material having a specific surface area in the above range and having an average particle diameter in the above range provides a positive electrode excellent with respect to energy density and cycle characteristics.

To form the positive electrode active material layer, a slurry containing a positive electrode active material, a binder, and a solvent (and a conductive aid, as necessary) is first prepared, and the slurry is applied on a positive electrode current collector, dried, and subjected to pressing, as necessary. For the slurry solvent used in fabricating the positive electrode, N-methyl-2-pyrrolidone (NMP) may be used.

(Binder for positive electrode)

The binder for a positive electrode is not limited, and binders commonly available for a positive electrode can be used. Among them, polyvinylidene fluoride (PVDF) is preferred in view of versatility and low cost. Further, examples of a binder other than polyvinylidene fluoride (PVdF) include vinylidene fluoride-hexafluoropropylene copolymers, vinylidene fluoride-tetrafluoroethylene copolymers, styrene-butadiene copolymer rubbers, polytetrafluoroethylene (PTFE), polypropylene, polyethylene, polyimide, and polyamideimide.

The content of the binder for a positive electrode is preferably in the range of 1 to 25 % by mass, more preferably in the range of 2 to 20 % by mass, and even more preferably in the range of 2 to 10 % by mass based on the positive electrode active material in view of binding strength and energy density, which are in a trade-off relation.

(Conductive aid for positive electrode)

A conductive aid may be added to the positive electrode active material layer for the purpose of lowering the impedance. Examples of the conductive aid include carbon black such as acetylene black. The content of the conductive aid in the active material layer can be set in the range of 1 to 10 % by mass based on the positive electrode active material.

(Positive electrode active material layer)

The porosity of the positive electrode active material layer constituting the positive electrode (excluding the current collector) is preferably 30% or lower, and more preferably 20% or lower. Since there is a tendency that high porosity (in other words, low electrode density) is accompanied by higher contact resistance and higher charge transfer resistance, it is preferred to set the porosity low as above, and it follows that the electrode density can be high. On the other hand, excessively low porosity (excessively high electrode density) provides low contact resistance but leads to increase of the charge transfer resistance and degradation of the rate characteristics, and thus it is desirable to ensure the porosity to a certain degree. From this viewpoint, the porosity is preferably 10% or higher, more preferably 12% or higher, and may be set to 15% or higher.

Porosity refers to the fraction of a volume excluding a volume occupied by particles of an active material and conductive aid from the apparent volume of the whole of an active material layer (see the equation below). Accordingly, porosity can be determined through calculation with the thickness of an active material layer, the mass of an active material layer per unit area, and the true density of particles of an active material and conductive aid.

$$\text{Porosity} = (\text{apparent volume of active material layer - volume of particles}) / (\text{apparent volume of active material layer})$$

"Volume of particles" (volume occupied by particles included in an active material layer) in the equation can be calculated by using the following equation.

$$\text{Volume of particles} = (\text{weight of active material layer per unit area} \times \text{area of active material layer} \times \text{content of particles}) / \text{true density of particles}$$

Here, "area of active material layer" refers to the area of a plane opposite to the current collector side (separator side).

The thickness of the positive electrode active material layer is not limited, and can be appropriately set in accordance with desired characteristics. For example, the thickness can be set large in view of energy density, and can be set small in view of output characteristics. The thickness of the positive electrode active material layer can be appropriately set, for example, in the range of 10 to 250 $\mu$m, and is preferably 20 to 200 $\mu$m, and more preferably 40 to 180 $\mu$m.

(Positive electrode current collector)

For the current collector for a positive electrode, for example, aluminum, stainless steel, nickel, titanium, or an alloy of them can be used. Examples of the shape include a foil, a plate, and a mesh. In particular, an aluminum foil can be suitably used.

(Negative electrode)

The negative electrode preferably has a structure including a current collector and a negative electrode active material layer formed on the current collector. The negative electrode active material layer includes a negative electrode active material and a binder, and preferably contains a conductive aid in view of enhancement of the electroconductivity. Preferably, the negative electrode active material layer further includes a fine graphite material in view of enhancement of the cycle characteristics.

(Negative electrode active material)

The negative electrode active material is not limited if it is an active material for a negative electrode capable of intercalating and deintercalating a lithium ion, but a carbon-based active material such as graphite material and amorphous carbon (e.g., graphitizable carbon, non-graphitizable carbon) can be suitably used. A substance commonly used for a negative electrode active material in a lithium ion secondary battery may be used for the carbon-based active material in preparation. Natural graphite or artificial graphite can be used for the graphite material, and natural graphite, which is inexpensive, is preferred in view of material cost. Examples of the amorphous carbon include amorphous carbons derived by heat treatment of coal pitch coke, petroleum pitch coke, or acetylene pitch coke.

In the case that a graphite material, in particular, natural graphite is used for the negative electrode active material, the graphite material may be covered with amorphous carbon. The surface of a particle of a graphite material can be covered with amorphous carbon by using a conventional method. Examples of the method which can be used include a method in which an organic substance such as tar pitch is attached to the surface of a particle and heat-treated; and a film-forming method such as a chemical vapor deposition method (CVD method) with an organic substance such as a condensed hydrocarbon of benzene, xylene or the like, sputtering method (e.g., ion beam sputtering method) with an organic substance such as a condensed hydrocarbon of benzene, xylene or the like, a vacuum deposition method, a plasma method, and an ion plating method. Amorphous carbon covering a particle of a graphite material can inhibit the side reaction between the particle of a graphite material and the electrolytic solution to enhance the charge/discharge efficiency and increase the reaction capacity, and in addition allows the particle of a graphite material to have a higher hardness.

The average particle diameter of the negative electrode active material is preferably in the range of 2 to 40 $\mu$m, more preferably in the range of 5 to 30 $\mu$m, and even more preferably in the range of 10 to 30 $\mu$m in view of the charge/discharge efficiency, input/output characteristics, or the like. Here, an average particle diameter refers to a particle diameter at an integrated value up to 50% (median diameter: $D_{50}$) in a particle size distribution (volume-based) obtained by using a laser diffraction/scattering method.

The specific surface area (a BET specific surface area measured at 77 K in accordance with a nitrogen adsorption method) of the negative electrode active material is preferably in the range of 0.3 to 10 m$^2$/g, more preferably in the range of 0.5 to 10 m$^2$/g, and even more preferably in the range of 0.5 to 7.0 m$^2$/g in view of the charge/discharge efficiency and input/output characteristics.

The ratio of the particle diameter at 90 cumulative% in the cumulative distribution ($D_{90}$) to the median diameter ($D_{50}$), $D_{90}/D_{50}$, of the negative electrode active material is preferably 1.5 or smaller, and more preferably 1.3 or smaller. The negative electrode active material having a sharp particle diameter distribution allows formation of a homogeneous negative electrode, and provides a resulting secondary battery with improved charge/discharge characteristics.

Here, a particle diameter $D_{90}$ refers to a particle diameter at an integrated value up to 90% in a particle size distribution (volume-based) obtained by using a laser diffraction/scattering method, and a median diameter $D_{50}$ refers to a particle diameter at an integrated value up to 50% in a particle size distribution (volume-based) obtained by using a laser diffraction/scattering method.

The particle of the negative electrode active material is preferably a spheroidized (non-scale-shaped) particle, and the average particle roundness is preferably in the range of 0.6 to 1, more preferably in the range of 0.86 to 1, even more preferably in the range of 0.90 to 1, and particularly preferably in the range of 0.93 to 1. Spheroidization may be performed by using a conventional method. Such a negative electrode active material particle is preferably a spheroidized natural graphite particle in view of high-capacity implementation in combination with cost reduction for raw materials, and a commonly available spheroidized natural graphite material may be used.

The particle roundness is given as follows: a particle image is projected on a plane; and when designating the periphery length of a corresponding circle having the same area as the projected particle image as 1 and designating the periphery length of the projected particle image as L, the ratio 1/L is defined as the particle roundness.

An average particle roundness can be measured with a commercially available electron microscope (e.g., a scanning electron microscope manufactured by Hitachi, Ltd., trade name: S-2500) as follows. First, an image of a particle (powder) is observed with the electron microscope at a magnification of 1000$\times$ and projected on a plane, and the periphery length of the projected image, L, is determined; the periphery length of a corresponding circle having the same area as the projected image of the particle observed, 1, is then determined; the ratio of the periphery length 1 to the periphery length of the projected image of the particle, L, i.e., 1/L, is calculated for arbitrarily selected 50 particles; and the average value is used as the average particle roundness. Alternatively, this measurement can be performed with a flow-type particle image analyzer. For example, almost the same value is obtained even when the particle roundness is measured with a powder measurement apparatus available from Hosokawa Micron Corporation (trade name: FPIA-1000).

The configuration in which the negative electrode active material has high roundness promotes formation of an interparticle void of the negative electrode active material, and as a result the fine graphite material tends to be disposed in a homogeneously dispersed manner, which leads to contribution to improvement of the cycle characteristics. In addition, formation of an interparticle void facilitates flowing of the electrolytic solution, and thus can contribute to improvement of the output characteristics. In the case that natural graphite, which has a higher tendency to take on a specific orientation through pressing in preparation of an electrode than artificial graphite, is used for the negative electrode active material, the natural graphite takes on a random orientation through spheroidization, and thus can contribute to improvement of the output characteristics.

The negative electrode active material, the fine graphite material, and the conductive aid may be mixed together by using a known mixing method. An additional active material may be mixed therein, as necessary, within a range which does not impair a desired effect.

In the case that the graphite material is used for the negative electrode active material, the content of the graphite material based on the total amount of the negative electrode active material (excluding the fine graphite material) is preferably 90 % by mass or more, and more preferably 95 % by mass or more. The negative electrode active material may be composed only of the graphite material.

(Fine graphite material)

The negative electrode in the non-aqueous electrolytic solution secondary battery according to an exemplary embodiment preferably includes a negative electrode active material, a fine graphite material, a conductive aid, and a binder. The fine graphite material includes a particle contacting with a particle of the negative electrode active material, or a particle contacting with a particle of the conductive aid contacting with a particle of the negative electrode active material, and an electroconductive path can be formed between particles of the negative electrode active material via the particle of the fine graphite material (hereinafter, also referred to as "fine graphite particle").

The average particle diameter (median diameter $D_{50}$) of the fine graphite material in the negative electrode is preferably smaller than the average particle diameter (median diameter $D_{50}$) of the negative electrode active material, and in addition preferably in the range of 1 to 15 $\mu$m. The mass ratio of the fine graphite material in the negative electrode to the conductive aid is preferably in the range from 1 to 10.

Use of such a negative electrode provides a non-aqueous electrolytic solution secondary battery (lithium ion secondary battery) with improved cycle characteristics. This is presumably because addition of an appropriate amount of a fine graphite particle having an appropriate size to a particle of a negative electrode active material allows the fine graphite particle to involve in formation and retention of an electroconductive path between particles of the negative electrode active material thereby to prevent disconnection of the electroconductive path between particles of the negative electrode active material in charge/discharge cycles, and thus the electroconductive path tends to be retained.

To ensure an electroconductive path in charge/discharge cycles, a large amount of a conductive aid is correspondingly required. The amount of a conductive aid can be reduced through addition of a fine graphite material. As a result generation of gas derived from decomposition of an electrolytic solution due to a conductive aid (in particular, a conductive aid having a large specific surface area or having a functional group on the surface) can be suppressed, and in addition reduction of the peel strength and capacity due to addition of a large amount of a conductive aid can be prevented. Further, fine graphite materials have capacity, and thus can reduce lowering of the capacity due to addition. Furthermore, fine graphite materials have excellent electro conductivity, and thus can form an electroconductive path with low resistance to contribute to improvement of the cycle characteristics.

Conductive aids (in particular, conductive aids having a primary particle diameter in the order of tens of nanometers) such as carbon black and Ketjen black have high agglomerating properties. Then, it is difficult to homogeneously disperse the conductive aid in the interparticle space of the negative electrode active material, and unevenness is likely to be generated in the network of electroconductive paths. The electroconductive path formed via such a fine conductive aid particle has effective electroconductivity in early stages of cycles. As a charge/discharge cycle is repeated, however, disconnection of the electroconductive path is likely to occur in association with, for example, the volume change (swelling, shrinkage) of the negative electrode active material, and drastic increase of the resistance or lowering of the capacity may be caused. In addition, fine particles of the conductive aid may fill the interparticle gap of the negative electrode active material to disconnect the flow path for an electrolytic solution. On the other hand, fine graphite particles have a relatively large particle diameter. Thus, they are excellent in dispersibility and can reduce unevenness of the network of electroconductive paths, and in addition filling of the interparticle gap of the negative electrode active material can be prevented. As a result, disconnection of the electroconductive path or flow path for an electrolytic solution is less likely to occur in charge/discharge cycles, and thus increase of the resistance or deterioration of the capacity can be reduced.

Moreover, an SEI film is formed on each fine graphite particle constituting the electroconductive path, and the SEI film formed on the fine graphite particle is homogeneously dispersed can presumably function also as a migration path for a lithium ion to contribute to improvement of the properties.

In formation of the electroconductive path between particles of the negative electrode active material, the fine graphite particle contacting with a particle of the negative electrode active material may be directly contacting with another particle of the negative electrode active material, or may form an electroconductive path electrically connecting to another particle of the negative electrode active material via an electroconductive particle included in the negative electrode (e.g., a conductive aid particle or another fine graphite particle). For example, the fine graphite particle contacting with a particle of the negative electrode active material may be contacting with a particle (primary particle or secondary particle) of the conductive aid contacting with another particle of the negative electrode active material. The fine graphite particle contacting with a particle of the negative electrode active material may be contacting with another fine graphite particle contacting with another particle of the negative electrode active material.

In formation of the electroconductive path between particles of the negative electrode active material, the fine graphite particle contacting with a particle (primary particle or secondary particle) of the conductive aid contacting with a particle of the negative electrode active material may be directly contacting with another particle of the negative electrode active material, or may form an electroconductive path electrically connecting to another particle of the negative electrode active material via a particle of an electroconductivity material included in the negative electrode (e.g., a conductive aid particle or another fine graphite particle). For example, the fine graphite particle contacting with a particle (primary particle or secondary particle) of the conductive aid contacting with a particle of the negative electrode active material may be contacting with another particle (primary particle or secondary particle) of the conductive aid contacting with another particle of the negative electrode active material. The fine graphite particle contacting with a particle (primary particle or secondary particle) of the conductive aid contacting with a particle of the negative electrode active material may be contacting with another fine graphite particle contacting with another particle of the negative electrode active material.

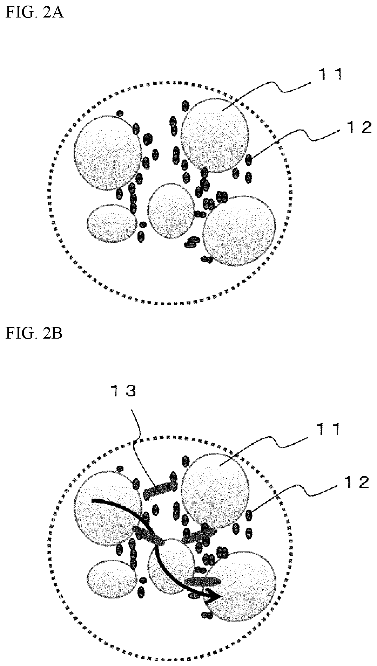

Figures 2A and 2B are schematic views for illustrating the distribution state of particles in the negative electrode in discharging (in shrinkage of the active material) after repeating charge/discharge cycles. Figure 2A shows the case without the fine graphite material, and Figure 2B shows the case with the fine graphite material. In the figures, the reference sign 11 indicates a negative electrode active material particle, the reference sign 12 indicates a conductive aid particle, and the reference sign 13 indicates a fine graphite particle. In Figure 2A, the electroconductive path is disconnected through the shrinkage of the active material in discharging after charge/discharge cycles. In contrast, Figure 2B shows an electroconductive path retained along the arrow via the fine graphite particles 13. The fine graphite particle, which is directly contacting with the negative electrode active material particle in the figures, may be contacting with a conductive aid particle contacting with a negative electrode active material particle, or a secondary particle thereof.

For the fine graphite material, a graphite material such as artificial graphite and natural graphite may be used. A substance commonly used for a negative electrode active material in a lithium ion secondary battery may be used for the graphite material in preparation.

The fine graphite material is preferably artificial graphite in view that artificial graphite contains fewer impurities while having an appropriate degree of graphitization and also has a low electrical resistance, which is advantageous for improving battery performance such as cycle characteristics. Normal artificial graphite commonly available may be applied.

The physical properties of artificial graphite depend on the type of a raw material, and the calcination temperature, the type of a gas for the atmosphere, and the pressure in production, and a desired fine graphite material can be obtained through adjustment of these production conditions. Examples thereof include an artificial graphite obtained by heat-treating a graphitizable carbon such as coke (e.g., petroleum coke, coal coke) and pitch (e.g., coal pitch, petroleum pitch, coal tar pitch) for graphitization at a temperature of 2000 to 3000°C, preferably at a high temperature of 2500°C or higher; an artificial graphite obtained by graphitizing two or more graphitizable carbons.

Alternatively, a material covered with amorphous carbon may be used, the material prepared through pyrolyzing a hydrocarbon such as benzene and xylene and allowing it to deposit on the surface of a base material containing natural graphite or artificial graphite by using a CVD method (chemical vapor deposition method).

The mass ratio of the fine graphite material to the conductive aid may be set in the range from 1 to 10. In view of obtaining a sufficient effect of addition, the mass ratio of the fine graphite material to the conductive aid is preferably 1 or more, more preferably 1.5 or more, and even more preferably 2 or more. In view of prevention of generation of gas or prevention of reduction of the peel strength, the mass ratio is preferably 10 or less, more preferably 8 or less, and even more preferably 7 or less.

The content of the fine graphite material based on the negative electrode active material is preferably in the range of 0.1 to 6.0 % by mass. In view of obtaining a sufficient effect of addition, the content of the fine graphite material based on the negative electrode active material is preferably 0.1 % by mass or more, more preferably 0.3 % by mass or more, and even more preferably 0.6 % by mass or more. In view of prevention of generation of gas or prevention of reduction of the peel strength, the content is preferably 6.0 % by mass or less, more preferably 4.0 % by mass or less, and even more preferably 3.0 % by mass or less. "The content of the fine graphite material based on the negative electrode active material" (% by mass) can be determined from $100 \times A/ B$, where A denotes the mass of the fine graphite material, and B denotes the mass of the negative electrode active material.

The average particle diameter (median diameter $D_{50}$) of the fine graphite material is preferably smaller than the average particle diameter (median diameter $D_{50}$) of the negative electrode active material, and more preferably in the range of 1 to 15 $\mu$m.

The configuration in which the fine graphite material has a moderately small median particle diameter provides an increased number of particles per unit weight, and therefore a larger number of contact points are formed even with a small amount of addition, which provides an advantageous effect for formation of an electro conductive path. In addition, the configuration in which the particle of the fine graphite material is smaller than the particle of the negative electrode active material facilitates disposition of the particle of the fine graphite material in the interparticle space or empty space of the negative electrode active material, which provides an advantageous effect for formation of an electroconductive path. Further, the influence on the peel strength can be reduced.

From such viewpoints, the average particle diameter ($D_{50}$) of the fine graphite material is preferably 15 $\mu$m or smaller, and more preferably 10 $\mu$m or smaller. The average particle diameter ($D_{50}$) of the fine graphite material is preferably smaller than the average particle diameter ($D_{50}$) of the negative electrode active material, and more preferably the ratio of the average particle diameter ($D_{50}$) of the fine graphite material, Db, to the average particle diameter ($D_{50}$) of the negative electrode active material, Da, Db/Da, is 0.7 or smaller, and even more preferably 0.67 or smaller.

If the particle diameter of the fine graphite material is excessively small, on the other hand, the specific surface area is larger to easily result in generation of gas derived from decomposition of the electrolytic solution, and also the electroconductive path is likely to be disconnected in charge/discharge cycles. For these reason, the average particle diameter ($D_{50}$) of the fine graphite material is preferably 1 $\mu$m or larger, and more preferably 4 $\mu$m or larger, and the BET specific surface area (acquired in measurement at 77 K in accordance with a nitrogen adsorption method) of the fine graphite material is preferably 45 m$^2$/g or smaller, and more preferably 20 m$^2$/g or smaller, and the Db/Da is preferably 0.2 or larger, and more preferably 0.3 or larger. In view of sufficient formation of contact points, the BET specific surface area of the fine graphite material is preferably larger than 1 m$^2$/g, and more preferably 4 m$^2$/g or larger.

In the case that the conductive aid is particulate, the particle diameter of the fine graphite material is preferably larger than the particle diameter of the conductive aid. In the case the conductive aid is fibrous, the particle diameter of the fine graphite material is preferably larger than the average diameter of the conductive aid. The presence of the fine graphite material having a relatively large size allows retention of the electroconductive path, even in a situation that the electroconductive path formed by the fine conductive aid is disconnected since the negative electrode active material shrinks in discharging, and the shrinkage enlarges the interparticle gap of the negative electrode active material as a result of charge/discharge cycles.

The ratio of the particle diameter at 90 cumulative% in the cumulative distribution ($D_{90}$) to the average particle diameter ($D_{50}$), $D_{90}/D_{50}$, of the fine graphite material is preferably larger than 1.5, and more preferably 1.65 or larger. Addition of the fine graphite material having a relatively small particle diameter and broad particle size distribution to the negative electrode active material having a relatively sharp particle size distribution can improve the packing factor, and provide a mixture having a high density.

Here, $D_{90}$ refers to a particle diameter at an integrated value up to 90% in a particle size distribution (volume-based) obtained by using a laser diffraction/scattering method, and $D_{50}$ refers to a particle diameter at an integrated value up to 50% (median diameter) in a particle size distribution (volume-based) obtained by using a laser diffraction/scattering method.

The particle of the fine graphite material preferably has an average particle roundness lower than that of the particle of the negative electrode active material, and the average particle roundness is preferably lower than 0.86, more preferably 0.85 or lower, and even more preferably 0.80 or lower. For example, a graphite particle having an average particle roundness of 0.5 or higher and lower than 0.86, or a graphite particle having an average particle roundness in the range of 0.6 to 0.85 may be used. For example, a scale-shaped particle can be suitably used.

Use of a spheroidized particle (non-scale-shaped particle) for the particle of the negative electrode active material and a particle having a roundness lower than that of the negative electrode active material particle (e.g., a scale-shaped particle) for the particle of the fine graphite material (preferably, with the mixing ratio, particle size distribution, or the like controlled as described above) allows the fine graphite particle to fill the interparticle space of the negative electrode active material in a homogeneously dispersed manner, and the negative electrode active material particle and the fine graphite particle can be packed in a high density. As a result, an adequate number of contact points between particles are formed while the electrolytic solution sufficiently permeates to prevent the electroconductive path from being disconnected, and thus the increase of resistance in cycles is suppressed and the capacity is less likely to be reduced.

(Conductive aid for negative electrode)

For the conductive aid, a carbon material commonly used as a conductive aid for a lithium ion secondary battery may be used, and examples thereof include electroconductive amorphous carbons such as Ketjen black, acetylene black, and carbon black; and electroconductive nanocarbon materials such as carbon nanofibers and carbon nanotubes. For the conductive aid, an amorphous carbon having a high electroconductivity and a low degree of graphitization (e.g., amorphous carbon with an R value, $I_D/I_G$, of 0.18 or higher and 0.7 or lower) can be used. $I_D$ is the peak strength of a D band around 1300 to 1400 cm$^{-1}$ in a Raman spectrum, and $I_G$ is the peak strength of a G band around 1500 to 1600 cm$^{-1}$ in a Raman spectrum.

The content of the conductive aid based on the negative electrode active material is preferably in the range of 0.1 to 3.0 % by mass. The content of the conductive aid based on the negative electrode active material is preferably 0.1 % by mass or more, more preferably 0.2 % by mass or more, and even more preferably 0.3 % by mass or more in view of sufficient formation of an electroconductive path, and the content is preferably 3.0 % by mass or less, more preferably 1.5 % by mass or less, and even more preferably 1.0 % by mass or less in view of prevention of generation of gas derived from decomposition of the electrolytic solution due to excessive addition of the conductive aid, or prevention of reduction of the peel strength or lowering of the capacity. "The content of the conductive aid based on the negative electrode active material" (% by mass) can be determined from $100 \times A/ B$, where A denotes the mass of the conductive aid, and B denotes the mass of the negative electrode active material.

The average particle diameter (primary particle diameter) of the conductive aid is preferably in the range of 10 to 100 nm. The average particle diameter (primary particle diameter) of the conductive aid is preferably 10 nm or larger, and more preferably 30 nm or larger in view of preventing the conductive aid from excessively aggregating and homogeneously dispersing the conductive aid in the negative electrode, and the average particle diameter is preferably 100 nm or smaller, and more preferably 80 nm or smaller in view of allowing formation of a sufficient number of contact points and forming a satisfactory electroconductive path. In the case that the conductive aid is fibrous, examples of such conductive aids include a fibrous conductive aid having an average diameter of 2 to 200 nm and an average fiber length of 0.1 to 20 $\mu$m.

Here, the average diameter of the conductive aid is a median diameter ($D_{50}$), i.e., a particle diameter at an integrated value up to 50% in a particle size distribution (volume-based) obtained by using a laser diffraction/scattering method.

(Method for fabricating negative electrode)

For the negative electrode for a lithium ion secondary battery according to an exemplary embodiment, for example, a negative electrode can be used in which a negative electrode active material layer including the above-described negative electrode active material, fine graphite material, and conductive aid, and further including a binder is provided on a negative electrode current collector.

The negative electrode may be formed by using a common slurry application method. For example, a slurry containing a negative electrode active material, a fine graphite material, a binder, and a solvent is prepared, and the slurry is applied on a negative electrode current collector, dried, and pressurized, as necessary, to obtain a negative electrode in which a negative electrode active material layer is provided on the negative electrode current collector. Examples of the method for applying a negative electrode slurry include a doctor blade method, die coater method, and a dip coating method. Alternatively, a negative electrode can be obtained by forming a thin film of aluminum, nickel, or an alloy of them as a current collector on a negative electrode active material layer which has been formed in advance, in accordance with a vapor deposition method, a sputtering method, or the like.

(Binder for negative electrode)

The binder for a negative electrode is not limited, and examples thereof include polyvinylidene fluoride (PVdF), vinylidene fluoride-hexafluoropropylene copolymers, vinylidene fluoride-tetrafluoroethylene copolymers, styrene-butadiene copolymer rubbers, polytetrafluoroethylene, polypropylene, polyethylene, polyimide, polyamideimide, methyl (meth)acrylate, ethyl (meth)acrylate, butyl (meth)acrylate, (meth)acrylonitrile, isoprene rubbers, butadiene rubbers, and fluororubbers. For the slurry solvent, N-methyl-2-pyrrolidone (NMP) or water may be used. In the case that water is used for the solvent, a thickener may be further used, such as carboxymethylcellulose, methylcellulose, hydroxymethylcellulose, ethylcellulose, and polyvinyl alcohol.

The content of the binder for a negative electrode is preferably in the range of 0.5 to 30 % by mass, more preferably in the range of 0.5 to 25 % by mass, and even more preferably in the range of 1 to 20 % by mass based on the negative electrode active material, in view of binding strength and energy density, which are in a trade-off relation.

(Negative electrode current collector)

The negative electrode current collector is not limited, but preferably copper, nickel, stainless steel, titanium, molybdenum, tungsten, tantalum, or an alloy containing two or more of them can be used in view of electrochemical stability. Examples of the shape include a foil, a plate, and a mesh.

(Non-aqueous electrolytic solution)

For the non-aqueous electrolytic solution, a non-aqueous electrolytic solution in which a lithium salt is dissolved in one or more non-aqueous solvents may be used.

The non-aqueous solvent is not limited, and example thereof include cyclic carbonates such as ethylene carbonate (EC), propylene carbonate (PC), butylene carbonate (BC), and vinylene carbonate (VC); chain carbonates such as dimethyl carbonate (DMC), diethyl carbonate (DEC), ethyl methyl carbonate (EMC), and dipropyl carbonate (DPC);

aliphatic carboxylates such as methyl formate, methyl acetate, and ethyl propionate; $\gamma$-lactones such as $\gamma$-butyrolactone; chain ethers such as 1,2-ethoxyethane (DEE) and ethoxymethoxyethane (EME); and cyclic ethers such as tetrahydrofuran and 2-methyltetrahydrofuran. One of these non-aqueous solvents may be used singly, or two or more thereof may be used in a mixture.

The lithium salt to be dissolved in the non-aqueous solvent is not limited, and examples thereof include $LiPF_6$, $LiAsF_6$, $LiAlCl_4$, $LiClO_4$, $LiBF_4$, $LiSbF_6$, $LiCF_3SO_3$, $LiCF_3CO_2$, $Li(CF_3SO_2)_2$, $LiN(CF_3SO_2)_2$, and lithium bis(oxalate)borate. One of these lithium salts may be used singly, or two or more thereof may be used in combination. Further, a polymer component may be contained as the non-aqueous electrolyte. The concentration of the lithium salt can be set in the range of 0.8 to 1.2 mol/L, and is preferably 0.9 to 1.1 mol/L.

To form an SEI (Solid Electrolyte Interface) film with a high quality on the surface of the negative electrode and stably maintain it, an electrode protective film-forming agent, as an additive, may be added into the electrolytic solution. The SEI film has, for example, an effect of suppressing the reactivity (decomposition) of an electrolytic solution, and an effect of inhibiting the physical degradation of the structure of a negative electrode active material through promotion of desolvation in association with insertion and elimination of a lithium ion. Examples of the electrode protective film-forming agent for formation and maintenance of such an SEI film with a high quality include compounds having a sulfo group; fluorinated carbonates such as fluoroethylene carbonate; unsaturated cyclic carbonates such as vinylene carbonate; sultone compounds (cyclic monosulfonates) such as 1,3-propanesultone and 1,4-butanesultone; and cyclic disulfonates such as methylene methanedisulfonate, ethylene methanedisulfonate, and propylene methanedisulfonate. In the case that an electrode protective film-forming agent, as an additive, is contained in the electrolytic solution, the content of the additive in the electrolytic solution (mass ratio to solvent) is preferably 0.005 % by mass or more, more preferably 0.01 % by mass or more, and even more preferably 0.1 % by mass or more in view of obtaining a sufficient effect of addition, and the content is preferably 10 % by mass or less, and more preferably 5 % by mass or less in view of reducing for example, increase of the viscosity or resistance of the electrolytic solution. Because methylene methanedisulfonate added to lower the charge transfer resistance of the positive electrode and improve the cycle characteristics of a battery can form an SEI film on the surface of the negative electrode, the total amount of methylene methanedisulfonate and other electrode protective film-forming agents is preferably 10 % by mass or less, more preferably 5 % by mass or less, and even more preferably 4 % by mass or less.

(Separator)

A separator may be provided between the positive electrode and the negative electrode. For the separator, a porous film made of a polyolefin such as polypropylene and polyethylene, a fluororesin such as polyvinylidene fluoride, or polyimide, woven fabric, nonwoven fabric, or the like may be used.

(Shape and structure of battery)

Examples of the shape of a battery include a cylinder, a rectangle, a coin type, a button type, and a laminate type. In the case of a laminate type, it is preferred to use a laminate film for an outer package to contain the positive electrode, the separator, the negative electrode, and the non-aqueous electrolytic solution. This laminate film includes a resin base material, a metal foil layer, and a heat-seal layer (sealant). Examples of the resin base material include polyester and nylon, and examples of the metal foil layer include an aluminum foil, an aluminum alloy foil, and a titanium foil. Examples of the material for the hot-seal layer include thermoplastic polymer materials such as polyethylene, polypropylene, and polyethylene terephthalate. Each of the resin base material layer and the metal foil layer is not limited to a single layer configuration, and may be in two or more layers. From the viewpoint of versatility and cost, an aluminum laminate film is preferred.

The positive electrode, the negative electrode, and the separator disposed therebetween are contained in an outer package container made of a laminate film, etc., and the electrolytic solution is injected therein, followed by sealing the outer package container. A structure in which an electrode group having a plurality of electrode pairs laminated is contained may be employed.

For an apparatus to form an active material layer on a current collector in fabrication of the positive electrode and negative electrode, various apparatuses with various application methods including a doctor blade, a die coater, a gravure coater, a transfer method, and a vapor deposition method, and a combination of these application apparatuses can be used. Use of a die coater is particularly preferred for precise formation of an edge portion with an active material applied thereon. Methods for applying an active material with a die coater are roughly classified into two types, specifically, continuous application methods to continuously form an active material along the longitudinal direction of a long current collector, and intermittent application methods to alternately and repeatedly form a portion with an active material applied thereon and a portion without application along the longitudinal direction of a current collector. These methods can be appropriately selected.

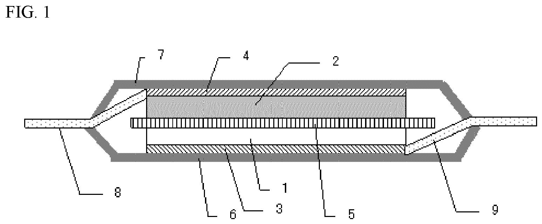

Figure 1 illustrates a cross-sectional view of an example of the non-aqueous electrolytic solution secondary battery (lithium ion secondary battery) according to an exemplary embodiment (laminate type). As illustrated in Figure 1, the lithium ion secondary battery of the present example includes: a positive electrode including a positive electrode current collector 3 made of a metal such as an aluminum foil and a positive electrode active material layer 1 provided thereon and containing a positive electrode active material; and a negative electrode including a negative electrode current collector 4 made of a metal such as a copper foil and a negative electrode active material layer 2 provided thereon and containing a negative electrode active material. The positive electrode and the negative electrode are laminated with a separator 5 made of a nonwoven fabric or a polypropylene microporous membrane interposed therebetween so that the positive electrode active material layer 1 and the negative electrode active material layer 2 are positioned on opposite surfaces of the separator 5. This electrode pair is contained in a container formed of outer packages 6, 7 made of an aluminum laminate film. The positive electrode current collector 3 is connected to a positive electrode tab 9 and the negative electrode current collector 4 is connected to a negative electrode tab 8, and these tabs are extracted through the container to the outside. An electrolytic solution is injected into the container, and the container is sealed. Alternatively, a structure in which an electrode group having a plurality of electrode pairs laminated is contained in a container may be used.

(Process for producing battery)

A battery having the above-described structure can be formed as follows.

First, a positive electrode and a negative electrode laminated with a separator interposed therebetween are put in a container, and an electrolytic solution is then injected into it, and thereafter vacuum impregnation is performed. To impregnate with the electrolytic solution more sufficiently, the container may be left to stand for a certain period of time or pressurized before application of vacuum.

After the vacuum impregnation, an unfused opening of the outer package is fused in vacuum for temporary sealing.

It is preferred to pressurize after the temporary sealing. This pressurizing can accelerate the infiltration of the electrolytic solution. Pressurizing can be achieved through application of pressure from the outside of the container with the battery sandwiched between a pair of pressing sheets. It is preferred to leave the battery to stand in a pressurized state (e.g., 2 to 6 N·m) for a given period of time (e.g., for 10 hours or longer, preferably 18 hours or longer, and preferably 30 hours or shorter in view of higher efficiency for the process).

Subsequently, pre-charging is performed in the temporarily sealed state. Charging and discharging may be repeated for a given number of cycles. It is preferred to maintain the pre-charging state for a given period of time (about 10 to 60 minutes). The pressure during pre-charging is not limited. If pressurizing has been performed prior to the pre-charging, the pressure can be set lower than the pressure in the pressurizing (e.g., pressurizing at about 0.2 to 0.6 N·m).

Next, the temporarily sealed portion is opened to degas. Thereafter, vacuum impregnation, temporary sealing, and pre-charging may be performed again, as necessary.

Subsequently, main sealing is performed. Thereafter, the surface of the container can be homogenized through rolling.

Subsequently, the battery is charged, and then left to stand for aging in the charged state under warming (e.g., at 35 to 55°C, preferably at 40 to 50°C) for a given period of time (e.g., for 7 days or longer, preferably for 7 to 30 days, more preferably for 10 to 25 days). During this aging treatment, the methylene methanedisulfonate added to the electrolytic solution can form a coating film on the surface of the positive electrode. This coating film formed is inferred to inhibit cracking of an active material caused by phase transition, decomposition of a solvent, and elution of alkali components, resulting in improvement of the cycle characteristics.

Thereafter, the battery is discharged, and subjected to charge/discharge treatment (RtRc treatment), as necessary, and thus a desired battery can be obtained.

Example

Hereinafter, an exemplary embodiment will be further described with reference to Examples.

(Example 1)

A spheroidized natural graphite (average particle diameter ($D_{50}$): 15 μm) with a high roundness was provided as a negative electrode active material and a scale-shaped artificial graphite (average particle diameter ($D_{50}$): 10 μm) was provided as a fine graphite material (hereinafter, referred to as "fine graphite"). A fine particle (carbon black) having an average particle diameter ($D_{50}$) of 100 nm or smaller was provided as a conductive aid.

As a result of the above-described measurement method, it was confirmed that the average particle roundness of the natural graphite was 0.86 or higher and higher than the average particle roundness of the scale-shaped fine graphite. In addition, it was confirmed by using a commercially available laser diffraction/scattering particle size analyzer that $D_{90}/D_{50}$ of the negative electrode active material (natural graphite) was 1.3 or smaller, and that $D_{90}/D_{50}$ of the fine graphite (scale-shaped artificial graphite) was 1.65 or higher.

The amount of the fine graphite material added was 2.0 % by mass based on the negative electrode active material (mass ratio to conductive aid: approximately 6.7). The amount of the conductive aid added was 0.3 % by mass based on the negative electrode active material.

The negative electrode active material (natural graphite), the fine graphite material (scale-shaped artificial graphite), and the conductive aid were mixed together at the above mass ratio, and the mixture and a 1.0 wt% aqueous solution of carboxymethylcellulose (thickener) were mixed together to prepare a slurry. A styrene-butadiene copolymer (binder) was mixed therein. The amount of the binder added was 2.0 % by mass based on the negative electrode active material.

This slurry was applied on one surface of a copper foil having a thickness of 10 $\mu$m, and dried to form a coating film. Similarly, the slurry was applied on the other surface and dried. Thereafter, the coating films (negative electrode coating films) were roll-pressed so that the density reached 1.5 g/cm$^3$, and the resultant was processed into a predetermined shape to obtain a negative electrode sheet having a size of 130 $\times$ 69.0 mm.

Separately, $LiNi_{0.8}Co_{0.1}Mn_{0.1}O_2$ (positive electrode active material) and polyvinylidene fluoride (binder) were dispersed in N-methyl-2-pyrrolidone to prepare a slurry. This slurry was applied on one surface of an aluminum foil, and dried to form a coating film. Similarly, the slurry was applied on the other surface and dried. Thereafter, the coating films (positive electrode coating films) were roll-pressed so that the density reached 3.0 g/cm$^3$, and the resultant was processed into a predetermined shape to obtain a positive electrode sheet having a size of 125 $\times$ 65.5 mm.

Five positive electrode sheets and six negative electrode sheets thus prepared were alternately laminated with a separator made of a porous polyethylene film having a thickness of 25 $\mu$m interposed between each adjacent two electrode sheets. An extraction electrode for a positive electrode and an extraction electrode for a negative electrode were provided, and then the laminate was covered with a laminate film, into which an electrolytic solution was injected from the unfused opening.

The electrolytic solution used was a solution obtained by dissolving a lithium salt ($LiPF_6$), as an electrolyte salt, in a mixture of ethylene carbonate (EC), diethyl carbonate (DEC), and ethyl methyl carbonate (EMC), as a solvent, at a volume ratio of 3:6:1 (EC:DEC:EMC) so that the concentration of the lithium salt reached 1.0 mol/L, and adding thereto methylene methanedisulfonate (MMDS), as an additive, so that the content reached 2.4 % by mass.

After the injection of the electrolytic solution, vacuum impregnation treatment was performed, and temporary sealing (temporary fusion) was then performed in a vacuum state. Subsequently, the resultant was left to stand with pressurizing from the outside by a pair of pressing sheets. Thereafter, the pressurizing pressure was decreased, and pre-charging was performed in a fixed state.

After the pre-charging, the resultant was left to stand, and the temporarily sealed portion was then opened to degas. Thereafter, second vacuum impregnation treatment was performed, and temporary sealing was then performed in a vacuum state. Subsequently, the temporarily sealed portion was subjected to main sealing (fusion).

Next, the surface of the laminate film forming the outer container was rolled, and main charging for aging was then performed. Subsequently, the resultant was left to stand at 45°C for 19 days for aging.

After the aging, charge/discharge treatment (RtRc treatment) was performed in the order of discharging, charging, and discharging under predetermined conditions.

The lithium ion secondary battery fabricated as described above was subjected to a charge/discharge cycle test (Cycle-Rate: 1C, temperature: 25°C, upper limit voltage: 4.15 V, lower limit voltage: 2.5 V), and the capacity retention rate after 300 cycles and the capacity retention rate after 500 cycles were determined. The result is shown in Tables 1 and 2.

In addition, AC impedance measurement (SOC 100%, 4.15 V) was performed, and the charge transfer resistance (after aging, after 500 cycles) was determined from an arc in the Cole-Cole plot. The resistance components derived from the positive electrode and the negative electrode were successfully separated from each other through fitting with an equivalent circuit, and it was found that the main component of the charge transfer resistance was derived from the positive electrode. The measurement result is shown in Tables 1 and 3.

(Example 2)

A secondary battery was fabricated and evaluated in the same manner as in Example 1 except that the content of the additive (MMDS) was changed to 3.2 % by mass. The result is shown in Tables 1 and 2.

(Comparative Example 1)

A secondary battery was fabricated and evaluated in the same manner as in Example 1 except that the additive (MMDS) and the fine graphite were not used. The result is shown in Table 2.

(Comparative Example 2)

A secondary battery was fabricated and evaluated in the same manner as in Example 1 except that the content of the additive (MMDS) was changed to 1.6 % by mass and the fine graphite was not used. The result is shown in Table 2.

(Comparative Example 3)

A secondary battery was fabricated and evaluated in the same manner as in Example 1 except that the content of the additive (MMDS) was changed to 1.6 % by mass. The result is shown in Tables 1 and 2.

(Comparative Example 4)

A secondary battery was fabricated and evaluated in the same manner as in Example 1 except that NCA (lithium-nickel-cobalt-aluminum composite oxide: $LiNi_{0.8}Co_{0.15}Al_{0.05}O_2$) was used for the positive electrode active material in place of NCM811, and VC (vinylene carbonate) was used for the additive in place of MMDS. The result is shown in Table 3.

(Comparative Example 5)

A secondary battery was fabricated and evaluated in the same manner as in Example 1 except that NCM523 ($LiNi_{0.5}CO_{0.2}Mn_{0.3}O_2$) was used for the positive electrode active material in place ofNCM811, and VC was used for the additive in place of MMDS and the content was set to 1.5 % by mass. The result is shown in Table 3.

(Comparative Example 6)

A secondary battery was fabricated and evaluated in the same manner as in Example 1 except that VC was used for the additive in place of MMDS and the content was set to 1.5 % by mass. The result is shown in Table 3.

(Comparative Example 7)

A secondary battery was fabricated and evaluated in the same manner as in Example 1 except that NCA was used for the positive electrode active material in place of NCM81 1, and PS (1,3-propanesultone) was used for the additive in place of MMDS and the content was set to 2.0 % by mass. The result is shown in Table 3.

(Comparative Example 8)

A secondary battery was fabricated and evaluated in the same manner as in Example 1 except that PS was used for the additive in place of MMDS and the content was set to 2.0 % by mass. The result is shown in Table 3.

[Table 1]

| | Additive | Additive content (wt%) | Charge transfer resistance (m$\Omega$) after 500 cycles | Capacity retention rate (%) after 500 cycles |
|---|---|---|---|---|
| Example 1 | MMDS | 2.4 | 14 | 93.7 |
| Example 2 | MMDS | 3.2 | 12 | 94.2 |
| Comparative Example 3 | MMDS | 1.6 | 23 | 91.4 |

It is clear from comparison between Comparative Example 3 and Examples 1 and 2 that the charge transfer resistance after 500 cycles was lower in Examples 1 and 2, in which an additive content is 2.0 % by mass or more, than that in Comparative Example 3, in which an additive content is less than 2.0 % by mass, and the capacity retention rate (cycle characteristics) is higher in relation to this result.

[Table 2]

| | Additive | Additive content (wt%) | Amount of fine graphite added (wt%) | Capacity retention rate (%) after 300 cycles |
|---|---|---|---|---|
| Comparative Example 1 | none | - | none | <89.6 |
| Comparative Example 2 | MMDS | 1.6 | none | 89.6 |
| Comparative Example 3 | MMDS | 1.6 | 2.0 | 94.2 |
| Example 1 | MMDS | 2.4 | 2.0 | 96.0 |
| Example 2 | MMDS | 3.2 | 2.0 | 96.4 |

The capacity retention rate fell below 95% as early as after 25 cycles in Comparative Example 1, using neither the additive (MMDS) nor the fine graphite, and thus the cycle characteristics were significantly low.

It is clear from comparison between Comparative Example 1 and Comparative Example 2 as described that use of the additive (MMDS) provides an improved capacity retention rate (cycle characteristics).

Further, it is clear from comparison between Comparative Example 2 and Comparative Example 3 that use of the fine graphite for the negative electrode in addition to the additive provides a more improved capacity retention rate (cycle characteristics).

Furthermore, it is clear from comparison between Comparative Example 3 and Examples 1 and 2 that an additive (MMDS) content of 2.0 or more provides a further improved capacity retention rate (cycle characteristics).

[Table 3]

| | Positive electrode active material | Additive | Additive content (wt%) | Charge transfer resistance (mΩ) after aging |
|---|---|---|---|---|
| Example 1 | NCM811 | MMDS | 2.4 | 13 |
| Comparative Example 4 | NCA | VC | 1.5 | 17 |
| Comparative Example 5 | NCM523 | VC | 1.5 | 17 |
| Comparative Example 6 | NCM811 | VC | 1.5 | 75 |
| Comparative Example 7 | NCA | PS | 2.0 | 11 |
| Comparative Example 8 | NCM811 | PS | 2.0 | 60 |

It is clear from the measurement results for the charge transfer resistance in Comparative Examples 4 to 8 that the charge transfer resistances in Comparative Examples 6 and 8, each using NCM811 as the positive electrode active material, were significantly higher than those in Comparative Examples 4, 5, and 7, each using another positive electrode active material (NCA, NCM523). Further, it is clear from comparison between Comparative Examples 6 and 8 and Example 1 that the additives (VC, PS) other than MMDS cannot provide a sufficient resistance-lowering effect.

In the foregoing, the present invention has been described with reference to the exemplary embodiments and the Examples; however, the present invention is not limited to the exemplary embodiments and the Examples. Various modifications understandable to those skilled in the art may be made to the constitution and details of the present invention within the scope of the current claims.

The present application claims the right of priority based on Japanese Patent Application No. 2016-55699 filed on March 18, 2016.

Reference Signs List

1    positive electrode active material layer
2    negative electrode active material layer
3    positive electrode current collector
4    negative electrode current collector
5    separator
6    laminate outer package
7    laminate outer package
8    negative electrode tab
9    positive electrode tab
11   negative electrode active material particle
12   conductive aid particle
13   fine graphite particle

**Claims**

1.  A non-aqueous electrolytic solution secondary battery comprising a positive electrode comprising a positive electrode active material capable of intercalating and deintercalating a lithium ion; a negative electrode comprising a negative electrode active material capable of intercalating and deintercalating a lithium ion; a non-aqueous electrolytic solution containing a lithium ion; and an outer package,

    wherein the positive electrode active material comprises a lithium-containing composite oxide having a layered rock salt structure and represented by the following composition formula:

    $$LiNi_xCo_yMn_zO_2$$

    provided that $0.7 \leq x \leq 0.9$, $0.05 \leq y \leq 0.2$, $0.05 \leq z \leq 0.15$, and $x + y + z = 1$ are satisfied, and
    the battery is formed by using the non-aqueous electrolytic solution containing methylene methanedisulfonate and having a content thereof of 2.3 % by mass or more and 4.0 % by mass or less based on a solvent;
    wherein, the negative electrode active material comprises a graphite active material; and
    wherein the negative electrode further comprises a fine graphite material having an average particle diameter smaller than an average particle diameter of the negative electrode active material.

2.  The non-aqueous electrolytic solution secondary battery according to claim 1, wherein the median diameter of the fine graphite material is in a range of 1 to 15 $\mu$m.

3.  The non-aqueous electrolytic solution secondary battery according to claim 1 or 2, wherein a content of the fine graphite material is in a range of 0.1 to 6.0 % by mass based on the negative electrode active material.

4.  The non-aqueous electrolytic solution secondary battery according to any one of claims 1 to 3,

    wherein the negative electrode further comprises a conductive aid, and
    a mass ratio of the fine graphite material to the conductive aid is in a range from 1 to 10.

5.  The non-aqueous electrolytic solution secondary battery according to claim 4, wherein a content of the conductive aid is in a range of 0.1 to 3.0 % by mass based on the negative electrode active material.

6.  The non-aqueous electrolytic solution secondary battery according to claim 4, wherein the conductive aid comprises an amorphous carbon particle having an average particle diameter ($D_{50}$) in a range of 10 to 100 nm, or a nanocarbon material.

7.  The non-aqueous electrolytic solution secondary battery according to any one of claims 1 to 6, wherein an average particle diameter ($D_{50}$) of the negative electrode active material is in a range of 10 to 30 $\mu$m.

8. The non-aqueous electrolytic solution secondary battery according to any one of claims 1 to 7, wherein the negative electrode active material comprises natural graphite or natural graphite covered with amorphous carbon.

9. A method for producing a non-aqueous electrolytic solution secondary battery comprising a positive electrode comprising a positive electrode active material capable of intercalating and deintercalating a lithium ion; a negative electrode comprising a negative electrode active material capable of intercalating and deintercalating a lithium ion; a non-aqueous electrolytic solution containing a lithium ion; and an outer package, the method comprising:

forming a positive electrode;
forming a negative electrode;
forming a non-aqueous electrolytic solution; and
putting the positive electrode, the negative electrode, and the non-aqueous electrolytic solution in an outer package,
wherein the positive electrode active material comprises a lithium-containing composite oxide having a layered rock salt structure and represented by the following composition formula:

$$LiNi_xCo_yMn_zO_2$$

provided that $0.7 \leq x \leq 0.9$, $0.05 \leq y \leq 0.2$, $0.05 \leq z \leq 0.15$, and $x + y + z = 1$ are satisfied, and the non-aqueous electrolytic solution contains methylene methanedisulfonate and has a content thereof is 2.3 % by mass or more and 4.0 % by mass or less based on a solvent;
wherein the negative electrode active material comprises a graphite active material, and
wherein the negative electrode further comprises a fine graphite material having an average particle diameter smaller than an average particle diameter of the negative electrode active material.

10. The method for producing a non-aqueous electrolytic solution secondary battery according to claim 9, wherein

the negative electrode further comprises a conductive aid, and
a mass ratio of the fine graphite material to the conductive aid is in a range from 1 to 10.


**Patentansprüche**

1. Sekundärbatterie mit nichtwässriger elektrolytischer Lösung, umfassend eine positive Elektrode, die ein aktives Material für die positive Elektrode umfasst, das in der Lage ist, ein Lithiumion einzulagern und auszulagern, eine negative Elektrode, die ein aktives Material für die negative Elektrode umfasst, das in der Lage ist, ein Lithiumion einzulagern und auszulagern, eine nichtwässrige elektrolytische Lösung, die ein Lithiumion enthält, und eine äußere Verpackung,

wobei das aktive Material der positiven Elektrode ein lithiumhaltiges Mischoxid mit einer geschichteten Steinsalzstruktur umfasst und durch die folgende Zusammensetzungsformel dargestellt wird:

$$LiNi_xCo_yMn_zO_2$$

vorausgesetzt, dass $0{,}7 \leq x \leq 0{,}9$, $0{,}05 \leq y \leq 0{,}2$, $0{,}05 \leq z \leq 0{,}15$ und $x + y + z = 1$ erfüllt sind, und die Batterie unter Verwendung der nichtwässrigen Elektrolytlösung gebildet wird, die Methylenmethandisulfonat enthält und einen Gehalt von 2,3 Massenprozent oder mehr und 4,0 Massenprozent oder weniger, bezogen auf ein Lösungsmittel, aufweist,
wobei das aktive Material der negativen Elektrode ein aktives Material aus Graphit umfasst und
wobei die negative Elektrode ferner ein feines Graphitmaterial mit einem durchschnittlichen Teilchendurchmesser umfasst, der kleiner ist als der durchschnittliche Teilchendurchmesser des aktiven Materials der negativen Elektrode.

2. Sekundärbatterie mit nichtwässriger Elektrolytlösung nach Anspruch 1, wobei der mittlere Durchmesser des feinen Graphitmaterials in einem Bereich von 1 bis 15 $\mu$m liegt.

3. Sekundärbatterie mit nichtwässriger Elektrolytlösung nach Anspruch 1 oder 2, wobei der Gehalt an feinem Graphitmaterial im Bereich von 0,1 bis 6,0 Massenprozent, bezogen auf das aktive Material der negativen Elektrode, liegt.

4. Sekundärbatterie mit nichtwässriger elektrolytischer Lösung nach einem der Ansprüche 1 bis 3,

    wobei die negative Elektrode außerdem ein leitfähiges Hilfsmittel umfasst, und
    ein Massenverhältnis des feinen Graphitmaterials zum Leithilfsmittel im Bereich von 1 bis 10 liegt.

5. Sekundärbatterie mit nichtwässriger Elektrolytlösung nach Anspruch 4, wobei der Gehalt an leitfähigem Hilfsmittel in einem Bereich von 0,1 bis 3,0 Massenprozent, bezogen auf das aktive Material der negativen Elektrode, liegt.

6. Sekundärbatterie mit nichtwässriger Elektrolytlösung nach Anspruch 4, wobei das leitfähige Hilfsmittel ein amorphes Kohlenstoffteilchen mit einem durchschnittlichen Teilchendurchmesser ($D_{50}$) im Bereich von 10 bis 100 nm oder ein Nanokohlenstoffmaterial umfasst.

7. Sekundärbatterie mit nichtwässriger Elektrolytlösung nach einem der Ansprüche 1 bis 6, wobei der durchschnittliche Teilchendurchmesser ($D_{50}$) des aktiven Materials der negativen Elektrode in einem Bereich von 10 bis 30 $\mu$m liegt.

8. Sekundärbatterie mit nichtwässriger Elektrolytlösung nach einem der Ansprüche 1 bis 7, wobei das aktive Material der negativen Elektrode Naturgraphit oder mit amorphem Kohlenstoff überzogenes Naturgraphit umfasst.

9. Verfahren zur Herstellung einer Sekundärbatterie mit nichtwässriger elektrolytischer Lösung, umfassend eine positive Elektrode, die ein aktives Material für die positive Elektrode umfasst, das in der Lage ist, ein Lithium-Ion einzulagern und auszulagern, eine negative Elektrode, die ein aktives Material für die negative Elektrode umfasst, das in der Lage ist, ein Lithium-Ion einzulagern und auszulagern, eine nichtwässrige elektrolytische Lösung, die ein Lithium-Ion enthält, und eine äußere Verpackung, wobei das Verfahren umfasst:

    Ausbildung einer positiven Elektrode,
    Ausbildung einer negativen Elektrode,
    Bildung einer nicht-wässrigen elektrolytischen Lösung und
    Einbringen der positiven Elektrode, der negativen Elektrode und der nichtwässrigen Elektrolytlösung in eine Außenverpackung,
    wobei das aktive Material der positiven Elektrode ein lithiumhaltiges Mischoxid mit einer geschichteten Steinsalzstruktur umfasst und durch die folgende Zusammensetzungsformel dargestellt wird:

$$LiNi_xCo_y\,Mn_zO_2$$

    vorausgesetzt, dass $0,7\leq x\leq 0,9$, $0,05\leq y\leq 0,2$, $0,05\leq z\leq 0,15$ und $x + y + z = 1$ erfüllt sind und
    die nichtwässrige elektrolytische Lösung Methylenmethandisulfonat enthält und einen Gehalt von 2,3 Massenprozent oder mehr und 4,0 Massenprozent oder weniger, bezogen auf ein Lösungsmittel, aufweist,
    wobei das aktive Material der negativen Elektrode ein aktives Material aus Graphit umfasst, und
    wobei die negative Elektrode ferner ein feines Graphitmaterial mit einem durchschnittlichen Teilchendurchmesser umfasst, der kleiner ist als der durchschnittliche Teilchendurchmesser des aktiven Materials der negativen Elektrode.

10. Verfahren zur Herstellung einer Sekundärbatterie mit nichtwässriger elektrolytischer Lösung nach Anspruch 9, wobei

    die negative Elektrode außerdem ein leitfähiges Hilfsmittel umfasst, und
    ein Massenverhältnis des feinen Graphitmaterials zum leitfähigen Hilfsmittel im Bereich von 1 bis 10 liegt.

**Revendications**

1. Batterie secondaire à solution électrolytique non aqueuse comprenant une électrode positive comprenant un matériau actif d'électrode positive capable d'intercaler et de désintercaler un ion de lithium ; une électrode négative comprenant un matériau actif d'électrode négative capable d'intercaler et de désintercaler un ion de lithium ; une solution électrolytique non aqueuse contenant un ion de lithium ; et un emballage extérieur,

    dans laquelle le matériau actif d'électrode positive comprend un oxyde composite contenant du lithium ayant une structure de sel gemme en couches et représenté par la formule de composition suivante :

$$LiNi_xCo_yMn_zO_z$$

pourvu que $0,7 \leq x \leq 0,9$, $0,05 \leq y \leq 0,2$, $0,05 \leq z \leq 0,15$ et $x+y+z=1$ soient satisfaits, et
la batterie est formée en utilisant la solution électrolytique non aqueuse contenant du méthanedisulfonate de méthylène et ayant une teneur en celui-ci de 2,3 % en masse ou
plus et de 4,0 % en masse ou moins sur la base d'un solvant ;
dans laquelle, le matériau actif d'électrode négative comprend un matériau actif de graphite ; et
dans laquelle l'électrode négative comprend en outre un matériau de graphite fin ayant un diamètre de particule moyen inférieur à un diamètre de particule moyen du matériau actif d'électrode négative.

2. Batterie secondaire à solution électrolytique non aqueuse selon la revendication 1, dans laquelle le diamètre médian du matériau de graphite fin est dans une plage de 1 à 15 $\mu$m.

3. Batterie secondaire à solution électrolytique non aqueuse selon la revendication 1 ou 2, dans laquelle une teneur en matériau de graphite fin est dans une plage de 0,1 à 6,0 % en masse sur la base du matériau actif d'électrode négative.

4. Batterie secondaire à solution électrolytique non aqueuse selon l'une quelconque des revendications 1 à 3,

dans laquelle l'électrode négative comprend en outre un adjuvant conducteur, et
un rapport de masse du matériau de graphite fin à l'adjuvant conducteur est dans une plage de 1 à 10.

5. Batterie secondaire à solution électrolytique non aqueuse selon la revendication 4, dans laquelle une teneur de l'adjuvant conducteur est dans une plage de 0,1 à 3,0 % en masse sur la base du matériau actif d'électrode négative.

6. Batterie secondaire à solution électrolytique non aqueuse selon la revendication 4, dans laquelle l'adjuvant conducteur comprend une particule de carbone amorphe ayant un diamètre de particule moyen ($D_{50}$) dans une plage de 10 à 100 nm, ou un matériau de nanocarbone.

7. Batterie secondaire à solution électrolytique non aqueuse selon l'une quelconque des revendications 1 à 6, dans laquelle un diamètre de particule moyen (Dso) du matériau actif d'électrode négative est dans une plage de 10 à 30 $\mu$m.

8. Batterie secondaire à solution électrolytique non aqueuse selon l'une quelconque des revendications 1 à 7, dans laquelle le matériau actif d'électrode négative comprend du graphite naturel ou du graphite naturel recouvert de carbone amorphe.

9. Procédé de production d'une batterie secondaire à solution électrolytique non aqueuse comprenant une électrode positive comprenant un matériau actif d'électrode positive capable d'intercaler et de désintercaler un ion de lithium ; une électrode négative comprenant un matériau actif d'électrode négative capable d'intercaler et de désintercaler un ion de lithium ; une solution électrolytique non aqueuse contenant un ion de lithium ; et un emballage extérieur, le procédé comprenant :

la formation d'une électrode positive ;
la formation d'une électrode négative ;
la formation d'une solution électrolytique non aqueuse ; et
la mise de l'électrode positive, l'électrode négative et la solution électrolytique non aqueuse dans un emballage extérieur,
dans lequel le matériau actif d'électrode positive comprend un oxyde composite contenant du lithium ayant une structure de sel gemme en couches et représenté par la formule de composition suivante :

$$LiNi_xCo_yMn_zO_2$$

pourvu que $0,7 \leq x \leq 0,9$, $0,05 \leq y \leq 0,2$, $0,05 \leq z \leq 0,15$ et $x+y+z=l$ soient satisfaits, et
la solution électrolytique non aqueuse contient du méthanedisulfonate de méthylène et
a une teneur en celui-ci de 2,3 % en masse ou plus et de 4,0 % en masse ou moins sur la base d'un solvant ;
dans lequel le matériau actif d'électrode négative comprend un matériau actif de graphite, et
dans lequel l'électrode négative comprend en outre un matériau de graphite fin ayant un diamètre de particule moyen inférieur à un diamètre de particule moyen du matériau actif d'électrode négative.

10. Procédé de production d'une batterie secondaire à solution électrolytique non aqueuse selon la revendication 9, dans lequel

l'électrode négative comprend en outre un adjuvant conducteur, et
un rapport de masse du matériau de graphite fin à l'adjuvant conducteur est dans une plage de 1 à 10.

FIG. 1

FIG. 2A

FIG. 2B

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2014086221 A
- JP 2009026514 A
- JP 2012014838 A
- JP 2012084519 A
- WO 2015194559 A1
- JP 2016055699 A